# EUROPÄISCHE PATENTANMELDUNG

(11) **EP 4 650 307 A1**
(43) Veröffentlichungstag der Anmeldung: **19.11.2025**
(21) Anmeldenummer: 24176060.2
(22) Anmeldetag: 15.05.2024
(51) Int. Cl.: B65G 47/84

(54) **FÖRDEREINRICHTUNG**

(71) Anmelder: HINTERKOPF GmbH, 73054 Eislingen/Fils (DE)
(72) Erfinder: BUTZ, Dominik, 73037 Göppingen (DE); THIEMANN, Christian, 70376 Stuttgart (DE)
(74) Vertreter: Patentanwälte Magenbauer & Kollegen Partnerschaft mbB

(57) **Zusammenfassung**

Die Erfindung betrifft eine Fördereinrichtung (7) für kreiszylindrische Dosen (11), mit einem Maschinengestell (61), an dem ein Stator (64) einer Antriebseinrichtung (67) festgelegt ist, die einen beweglich am Stator (64) gelagerten Rotor (65) aufweist, wobei am Rotor (65) wenigstens ein Saughalter (71; 171; 271) angeordnet ist, der für eine Kraftübertragung auf einen Dosenboden (51) einer kreiszylindrischen Dose (11) ausgebildet ist und der an einer dem Rotor (65) abgewandten Saugoberfläche (72; 172; 272) eine eben ausgebildete Kreisringfläche (76; 176; 276) aufweist, die in radialer Richtung von wenigstens einem Zentrierelement (74, 75; 274; 175) berandet ist, das auf einem koaxial zu einer Mittelachse (12) der Kreisringfläche (76; 176; 276) ausgerichteten Zentrierkreis angeordnet ist, wobei radial nach innen beabstandet von der Kreisringfläche (76; 176; 276) ein Fluidauslass (77) für eine Vakuumbeaufschlagung eines Vakuumraums angeordnet ist, der von der Saugoberfläche (72; 172; 272) und von einem Dosenboden (51) begrenzt ist.

## Beschreibung

Die Erfindung betrifft eine Fördereinrichtung für kreiszylindrische Dosen, mit einem Maschinengestell, an dem ein Stator einer Antriebseinrichtung festgelegt ist, wobei die Antriebseinrichtung einen Rotor aufweist, der beweglich, insbesondere drehbeweglich um eine Rotorachse, am Stator gelagert ist.

Die EP 3 473 446 A1 offenbart eine Rundtisch-Digitaldruckmaschine zur Bedruckung von Werkstücken, mit wenigstens einer an einer Halteeinrichtung angebrachten Arbeitsstation, die als Druckwerk zur Bedruckung von Werkstücken ausgebildet ist und die einen Trägerrahmen zur Aufnahme eines Farbwerks und eines Druckkopfmoduls umfasst, der eine Druckwerkschnittstelle für eine Kopplung mit einer der Halteeinrichtung zugehörigen Druckwerkaufnahme ausgebildet ist und der eine Drucckopfschnittstelle aufweist, die zur Kopplung mit einem Drucckopfmodul ausgebildet ist, mit einem Druckkopfmodul und mit einem Farbwerk, das für eine Bereitstellung einer Druckfarbe an das Druckkopfmodul ausgebildet ist.

Die Aufgabe der Erfindung besteht darin, eine Fördereinrichtung für kreiszylindrische Dosen bereitzustellen, mit der ein Beschädigungsrisiko für die Dosen beim Transport reduziert werden kann.

Diese Aufgabe wird für eine Fördereinrichtung der eingangs genannten Art dadurch gelöst, dass an dem Rotor wenigstens ein Saughalter angeordnet ist, der für eine Kraftübertragung auf einen Dosenboden einer kreiszylindrische Dose ausgebildet ist, wobei der Saughalter an einer dem Rotor abgewandten Saugoberfläche eine eben ausgebildete Kreisringfläche aufweist, die in radialer Richtung von wenigstens einem Zentrierelement berandet ist, das auf einem koaxial zu einer Mittelachse der Kreisringfläche ausgerichteten Zentrierkreis angeordnet ist, wobei radial nach innen beabstandet von der Kreisringfläche ein Fluidauslass für eine Vakuumbeaufschlagung eines Vakuumraums angeordnet ist, der bereichsweise von der Saugoberfläche und bereichsweise von einem Dosenboden begrenzt ist.

Die Fördereinrichtung kann für einen reinen Transport von kreiszylindrischen Dosen, insbesondere von Aerosoldosenrohlingen, Aluminium-Metallflaschen, mehrteiligen Stahldosenrohlingen, Kunststoffhohlkörpern, verwendet werden, um die Dosen von einer stromauf eines Förderwegs angeordneten Bearbeitungsmaschine zu einer stromab des Förderwegs angeordneten Bearbeitungsmaschine zu transportieren. Ergänzend kann vorgesehen sein, dass die Dosen, die an die Fördereinrichtung zur Verfügung gestellt werden, bei der Durchführung des Transports durch die Fördereinrichtung auch bearbeitet werden.

Zu Bereitstellung einer Förderbewegung für die Dosen umfasst die Fördereinrichtung eine Antriebseinrichtung, die einen Stator und einen Rotor umfasst. Der Stator ist ortsfest an einem Maschinengestell der Fördereinrichtung festgelegt, das seinerseits beispielsweise auf einem Hallenboden einer Fertigungshalle aufgestellt ist. Der Rotor ist beweglich am Stator gelagert und ist für eine lineare Relativbewegung oder für eine rotatorische Relativbewegung oder für eine kombinierte lineare und rotatorische Relativbewegung gegenüber dem Stator ausgebildet. Bei einer Antriebseinrichtung, mit der eine lineare Relativbewegung bereitgestellt werden soll, wird die bewegliche Komponente entweder als Läufer oder als Rotor bezeichnet. Vorzugsweise ist vorgesehen, dass der Rotor drehbeweglich um eine Rotorachse am Stator gelagert ist. Der Rotor kann durch Bereitstellung von elektrischer oder hydraulischer oder pneumatischer Energie in eine Relativbewegung, insbesondere in eine Rotationsbewegung um die Rotorachse, relativ zum Stator versetzt werden. Typische Beispiele für Antriebseinrichtungen sind Elektromotoren (insbesondere rotierende Synchronmotoren, rotierende Asynchronmotoren, rotierende Schrittmotoren, translatorische Lineardirektantriebe), Hydraulikmotoren, Pneumatikmotoren. In Abhängigkeit von dem bestimmungsgemäßen Gebrauch der Fördereinrichtung kann die Antriebseinrichtung eine kontinuierliche oder eine diskontinuierliche Relativbewegung, insbesondere Rotationsbewegung, bereitstellen. Bevorzugt ist vorgesehen, dass die Antriebseinrichtung eine Drehbewegung mit konstanter Drehzahl oder eine Drehschrittbewegung mit einer Abfolge von Schwenkbewegungen des Rotors um definierte Winkelbeträge und darauf folgenden Stillstandszeiten bereitstellt.

Um eine Förderung von Dosen entlang eines geradlinigen oder gekrümmten Förderwegs zu ermöglichen, ist der Rotor mit wenigstens einem Saughalter ausgerüstet, der für eine Fixierung der Dose ausgebildet ist. Hierzu ist vorgesehen, dass die Dose mit ihren Dosenboden auf den Saughalter aufgesetzt wird und anschließend zwischen dem Dosenboden und dem Saughalter ein Unterdruck erzeugt wird, mit dem die Dose an dem Saughalter festgelegt wird. Der hierfür notwendige Unterdruck ist derart bemessen, dass die Dose im Rahmen des bestimmungsgemäßen Gebrauchs der Fördereinrichtung zuverlässig am Saughalter festgelegt ist. Hierbei sind insbesondere die bei der Durchführung der Förderbewegung auftretenden Beschleunigungen und Abbremsungen der Dose sowie bei einer eventuellen Bearbeitung der Dose längs des von der Fördereinrichtung bestimmten Förderwegs auftretende Bearbeitungskräfte zu berücksichtigen.

Für die Festlegung der Dose am Saughalter ist eine abdichtende Anlage des Dosenbodens am Saughalter erforderlich. Bevorzugt ist vorgesehen, dass die Dose mit einem kreisringförmigen Bereich des Dosenbodens an einer eben ausgebildeten Kreisringfläche des Saughalters in einer Weise anliegt. Dieser kreisringförmige Bereich des Dosenbodens ist typischerweise mit hoher Präzision hergestellt, da dieser Bereich des Dosenbodens auch für verschiedene Bearbeitungsschritte bei der Dosenherstellung als Referenzfläche genutzt wird und auch für den Qualitätseindruck, den die fertig bearbeitete Dose beim Endkunden hinterlässt, von großer Bedeutung ist. Üblicherweise ist ein vom kreisringförmigen Bereich des Dosenbodens umfasster Innenbereich des Dosenbodens konkav, insbesondere kugelabschnittsförmig vertieft, ausgebildet und wird auch als Dom bezeichnet. Hierdurch wird gewährleistet, dass der Dosenboden im befüllten und verschlossenen Zustand der Dose und einer eventuellen Erwärmung und einer damit verbundenen Ausdehnung des in der Dose aufgenommenen Füllguts möglichst keine Deformation erfährt, die zu einer Beeinträchtigung der Geometrie des Dosenbodens führt.

Die am Saughalter ausgebildete Kreisringfläche ist dem Rotor abgewandt. Vorzugsweise ist eine Flächennormale auf die Kreisringfläche parallel zu einem Abstand zwischen dem Rotor und dem Saughalter ausgerichtet.

Rein exemplarisch ist vorgesehen, dass die aus einem Material mit geringer Elastizität, beispielsweise Stahl, Aluminium oder einem hochfesten Kunststoff, hergestellte Dose unmittelbar und ohne Zwischenschaltung eines gummielastischen Dichtrings an der Kreisringfläche des Saughalters anliegt. Beispielhaft ist vorgesehen, dass der Saughalter ebenfalls aus einem Material mit geringer Elastizität, insbesondere Stahl, Aluminium oder einem hochfesten Kunststoff hergestellt ist, wobei aufgrund der präzisen Herstellung des Dosenbodens sowie der eben ausgebildeten Kreisringfläche am Saughalter eine vorteilhafte Dichtwirkung zwischen dem Saughalter und dem Dosenboden erzielt wird.

Um eine Zentrierung der Dose bei der Annäherung an den Saughalter zu unterstützen und gegebenenfalls die Dichtwirkung zwischen der Kreisringfläche des Saughalters und dem Dosenboden zu erhöhen, ist angrenzend an die Kreisringfläche wenigstens ein Zentrierelement vorgesehen, das für eine Anlage an einer radial nach innen gewandten oder radial nach außengewandten Umfangsfläche der Dose, beispielsweise an einer radial nach außen gewandten Seitenfläche der Dose oder an einer radial nach innen gewandten Seitenfläche der Dose, ausgebildet ist. Das wenigstens eine Zentrierelement ist derart angeordnet, dass eine der Dose zugewandte Kontaktfläche des Zentrierelement auf einem Zentrierkreis angeordnet ist, der koaxial zur Mittelachse der Kreisringfläche ausgerichtet ist. Sind mehrere Zentrierelemente vorgesehen, die jeweils gleichartig ausgebildet sind, beispielsweise als Zentrierstifte, so kann auch vorgesehen sein, dass Mittelachsen dieser Zentrierelement auf dem Zentrierkreis angeordnet sind.

Um eine Unterdruckbeaufschlagung und gegebenenfalls nachfolgend eine Überdruckbeaufschlagung des von der Kreisringfläche und dem Dosenboden begrenzten Druckraums zu ermöglichen, ist der Saughalter mit wenigstens einem Fluidauslass versehen, der in den Druckraum ausmündet und der für eine Abfuhr eines Arbeitsfluids, insbesondere Luft, aus dem Druckraum und gegebenenfalls für eine Zufuhr eines Arbeitsfluids, insbesondere druckbeaufschlagter Luft, in den Arbeitsraum vorgesehen ist. Der Fluidauslass kann beispielsweise als Bohrung ausgebildet sein, die den Saughalter durchsetzt und in einem Oberflächenbereich des Saughalters ausmündet, der von der Kreisringfläche begrenzt ist.

Vorteilhafte Weiterbildungen der Erfindung sind Gegenstand der Unteransprüche.

Zweckmäßig ist es, wenn das Zentrierelement als Ringbund ausgebildet ist, der eine an die Kreisringfläche angrenzende, koaxial zur Mittelachse ausgerichtete kreiszylindrische oder konusmantelförmige Umfangswand aufweist. Mit einer Ausgestaltung des Zentrierelements als Ringbund, der die Kreisringfläche zumindest nahezu vollständig, insbesondere vollständig, berandet, kann eine Verbesserung der Dichtwirkung zwischen dem Saughalter und der Dose erzielt werden. Dies gilt insbesondere dann, wenn eine an die Kreisringfläche angrenzende und der Kreisringfläche zugewandte, insbesondere zylindermantelförmige oder kegelmantelförmige, Umfangswand des Ringbunds mit der gegenüberliegenden Umfangsfläche der Dose einen Ringspalt begrenzt, der eine Spaltweite kleiner als 1 mm, vorzugsweise kleiner als 0,5 mm, insbesondere kleiner als 0,2 mm, aufweist.

Bevorzugt ist vorgesehen, dass der Ringbund in radialer Richtung nach innen an die Kreisringfläche angrenzt. Hierbei weist die Umfangswand des Ringbunds einen Durchmesser auf, der einem Innendurchmesser der Kreisringfläche entspricht und der geringfügig kleiner als ein Innendurchmesser des Dosenbodens gewählt ist, sofern die Umfangswand des Ringbunds eine zylindermantelförmige Gestaltung aufweist. Für den Fall einer kegelmantelförmigen Gestaltung der Umfangswand des Ringbunds ist vorgesehen, dass die Umfangswand am Übergang zur Kreisringfläche einen Durchmesser aufweist, der dem Innendurchmesser der Kreisringfläche entspricht und sich mit zunehmendem Abstand von der Kreisringfläche reduziert.

Vorteilhaft ist es, wenn der Ringbund in radialer Richtung nach außen an die Kreisringfläche angrenzt. Hierbei weist die Umfangswand des Ringbunds einen Durchmesser auf, der einem Außendurchmesser der Kreisringfläche entspricht und der geringfügig größer als ein Außendurchmesser des Dosenbodens gewählt ist, sofern die Umfangswand des Ringbunds eine zylindermantelförmige Gestaltung aufweist. Für den Fall einer kegelmantelförmigen Gestaltung der Umfangswand des Ringbunds ist vorgesehen, dass die Umfangswand am Übergang zur Kreisringfläche einen Durchmesser aufweist, der dem Außendurchmesser der Kreisringfläche entspricht und sich mit zunehmendem Abstand von der Kreisringfläche vergrößert.

Bei einer Weiterbildung der Erfindung ist vorgesehen, dass der, insbesondere als Läufer eines Antriebsmotors ausgebildete, Saughalter drehbeweglich um die Mittelachse am Rotor gelagert ist. Mit der drehbewegliche Lagerung des Saughalters am Rotor kann eine rotatorische Positionierung der Dose um die Mittelachse der Kreisringfläche vorgenommen werden. Hierzu kann beispielsweise vorgesehen sein, dass an einer Oberfläche, insbesondere einer Außenumfangsfläche, des Saughalters eine Krafteinleitung vorgenommen wird, die zu der gewünschten Rotation des Saughalters mit der daran festgelegten Dose führt. Bevorzugt ist vorgesehen, dass der Saughalter als Läufer eines Antriebsmotors ausgebildet ist oder mit einem Läufer eines Antriebsmotors gekoppelt ist, wobei der Läufer durch Bereitstellung von elektrischer oder hydraulischer oder pneumatischer Energie an den Antriebsmotor in eine Rotationsbewegung versetzt werden kann. Besonders bevorzugt ist vorgesehen, dass eine Erfassung einer Rotationsbewegung des Läufers mit einer Sensoreinrichtung vorgenommen wird und ein Sensorsignal dieser Sensoreinrichtung an eine Antriebssteuerung bereitgestellt wird, die für eine geregelte (closed loop) Bereitstellung von Antriebsenergie an die Antriebseinrichtung ausgebildet ist.

In weiterer Ausgestaltung der Erfindung ist vorgesehen, dass die Mittelachse der Kreisringfläche parallel und beabstandet zur Rotorachse ausgerichtet ist. Hierdurch bewegt sich die am Saughalter aufgenommene Dose bei einer Rotationsbewegung des Rotors innerhalb einer kreiszylindrischen Hüllkurve. Bevorzugt ist vorgesehen, dass die Mittelachse der Kreisringfläche und die Rotorachse in vertikaler Richtung ausgerichtet sind.

Zweckmäßig ist es, wenn die Mittelachse der Kreisringfläche quer zur Rotorachse ausgerichtet ist. Hierdurch bewegt sich die am Saughalter aufgenommene Dose bei einer Rotationsbewegung des Rotors innerhalb einer kreisringförmigem Hüllkurve. Bevorzugt ist vorgesehen, dass die Mittelachse der Kreisringfläche in horizontaler Richtung und die Rotorachse in vertikaler Richtung ausgerichtet sind.

Bevorzugt ist vorgesehen, dass der Fluidauslass in fluidisch kommunizierender Verbindung mit einem Versorgungskanal steht, der sich vom Saughalter durch den Rotor in den Stator erstreckt, wobei der Versorgungskanal zwischen dem Rotor und dem Stator als Drehdurchführung ausgebildet ist. Hierdurch wird eine zentrale Luftabsaugung von dem wenigstens einen Saughalter und gegebenenfalls eine zentrale Luftzufuhr zu dem wenigstens einen Saughalter ermöglicht. Eine Drehdurchführung kann beispielsweise dadurch realisiert werden, dass an einer Außenoberfläche des Stators, die einer Innenoberfläche des Rotors zugewandt ist, eine zumindest bereichsweise in Umfangsrichtung umlaufende Nut ausgebildet ist, die mit einem Vakuum beaufschlagt ist und dass gegenüberliegend zu dieser Nut ein Teilabschnitt des im Rotor ausgebildeten Versorgungskanals ausmündet, so dass bei einer Rotation des Rotors gegenüber dem Stator eine Unterdruckversorgung des Saughalters ermöglicht wird. Dies ist insbesondere dann von Interesse, wenn mehrere Saughalter am Rotor angeordnet sind.

Bei einer vorteilhaften Weiterbildung der Erfindung ist vorgesehen, dass die Antriebseinrichtung zur Durchführung einer Drehschrittbewegung ausgebildet ist und dass dem Rotor eine Beladestation für eine Zufuhr von Dosen zu dem Saughalter und eine Entladestation für eine Abfuhr von Dosen von dem Saughalter zugeordnet ist und dass der Saughalter zwischen der Beladestation und der Entladestation einen kreisbogenabschnittsförmigen Förderweg überstreicht. Eine Drehschrittbewegung besteht aus einer, vorzugsweise zyklisch wiederkehrenden, Abfolge einer Schwenkbewegung des Rotors gegenüber dem Stator, gefolgt von einer Stillstandsphase. In der Stillstandsphase kann beispielsweise an einer Benachbart zum Rotor angeordneten Beladestation eine Zuführung einer Dose zur Fixierung am Saughalter vorgenommen werden. Hierzu kann vorgesehen sein, die Dose im Zuge einer Translationsbewegung oder einer Schwenkbewegung mit den Dosenboden in Kontakt mit dem Saughalter zu bringen, um anschließend durch Unterdruckbeaufschlagung des Versorgungskanals die Fixierung der Dose am Saughalter zu bewirken. Im Anschluss an diese Stillstandsphase kann die Dose durch eine oder mehrere Drehschrittbewegungen längs eines Förderwegs, der als Kreisbogenabschnitt ausgebildet ist, bis zu einer Entladestation transportiert werden. An der Entladestation findet beispielsweise eine Translationsbewegung für die Dose längs der Mittelachse statt, um die Dose nach Aufhebung der Vakuumversorgung für den Saughalter von dem Saughalter abzuheben und mittels eines Ladesterns, einer Förderkette oder eines Förderbands abzutransportieren.

Vorteilhaft ist es, wenn längs des Förderwegs wenigstens eine Dosenbearbeitungsstation aus der Gruppe: Oberflächenaktivierungsstation, Oberflächenpassivierungsstation, Oberflächenbeschichtungsstation, angeordnet ist. Die wenigstens eine Dosenbearbeitungsstation ist an einer Position längs des Förderweg angeordnet, an der der Saughalter im Zuge der Drehschrittbewegung während einer Stillstandsphase verharrt, so dass die Dosenbearbeitung ohne eine zwingende Relativbewegung zwischen Dose und Dosenbearbeitungsstation durchgeführt werden kann. Beispielhaft ist die Dosenbearbeitungsstation als Oberflächenaktivierungsstation ausgebildet, die beispielsweise einen mechanischen oder chemischen Aktivierungsprozess an der Außenoberfläche der Dose durchführt. Beispielsweise kann vorgesehen sein, dass die Außenoberfläche der Dose mit einer Lackierung versehen ist, die vor Durchführung eines Digitaldruckvorgangs durch eine elektrische Plasmabehandlung aktiviert werden muss, um eine vorteilhafte Anhaftung der Digitaldruckfarbe zu gewährleisten. In ähnlicher Weise kann an einer Oberflächenpassivierungsstation beispielsweise eine Plasmabehandlung zur Passivierung der Außenoberfläche der Dose vorgenommen werden, beispielsweise mit einem anderen Plasmagas als bei der Aktivierung der Außenoberfläche. Eine Oberflächenbeschichtungsstation kann beispielsweise als Druckstation, insbesondere als Digitaldruckstation, ausgebildet sein und ermöglicht die Aufbringung eines Dekors auf die Außenoberfläche der Dose. Beispielhaft wird an einer Oberflächenbeschichtungsstation unter Verwendung eines oder mehrerer Digitaldruckköpfe ein individuelles Dekor auf die Außenoberfläche der Dose aufgebracht.

In weiterer Ausgestaltung der Erfindung ist vorgesehen, dass längs des Förderwegs, insbesondere in konstanter Winkelteilung bezüglich der Rotorachse, mehrere Oberflächenbeschichtungsstationen angeordnet sind, die jeweils wenigstens einen Tintenstrahldruckkopf aufweisen. Eine derart ausgebildete Fördereinrichtung kann als Digitaldruckmaschine bezeichnet werden, mit der ein mehrfarbiges Dekor auf die Außenoberfläche der Dose aufgebracht werden kann.

Bevorzugt ist vorgesehen, dass der Saughalter einstückig ausgebildet ist. Vorzugsweise ist der Saughalter becherförmig ausgebildet, wobei die Kreisringfläche im Bereich der Bechermündung angeordnet ist. Besonders bevorzugt ist vorgesehen, dass am Saughalter keine beweglichen oder separat ausgebildeten Komponenten vorgesehen sind und/oder dass der Saughalter in einem spanabhebenden aus einem einzigen Rohmaterialblock gefertigt oder in einem generativen Herstellungsverfahren als monolithische Struktur erzeugt wird.

Nachfolgend wird die Erfindung anhand der beiliegenden Zeichnung näher erläutert und in dieser zeigen
- Figur 1: eine Bearbeitungseinrichtung für die Bearbeitung von Metallflaschen, mit einer als Digitaldruckmaschine ausgebildeten Fördereinrichtung, der ein Förderband und ein Ladestern für eine Dosenzufuhr sowie ein Ladestern und ein Förderband für eine Dosenabfuhr zugeordnet sind, wobei die Dosen an der Fördereinrichtung mittels Saughaltern festgelegt werden,
- Figur 2: eine vergrößerte und teilweise geschnittene Darstellung der Metallflasche und einer ersten Ausführungsform eines Saughalters,
- Figur 3: eine zweite Ausführungsform eines Saughalters, und
- Figur 4: eine dritte Ausführungsform eines Saughalters.

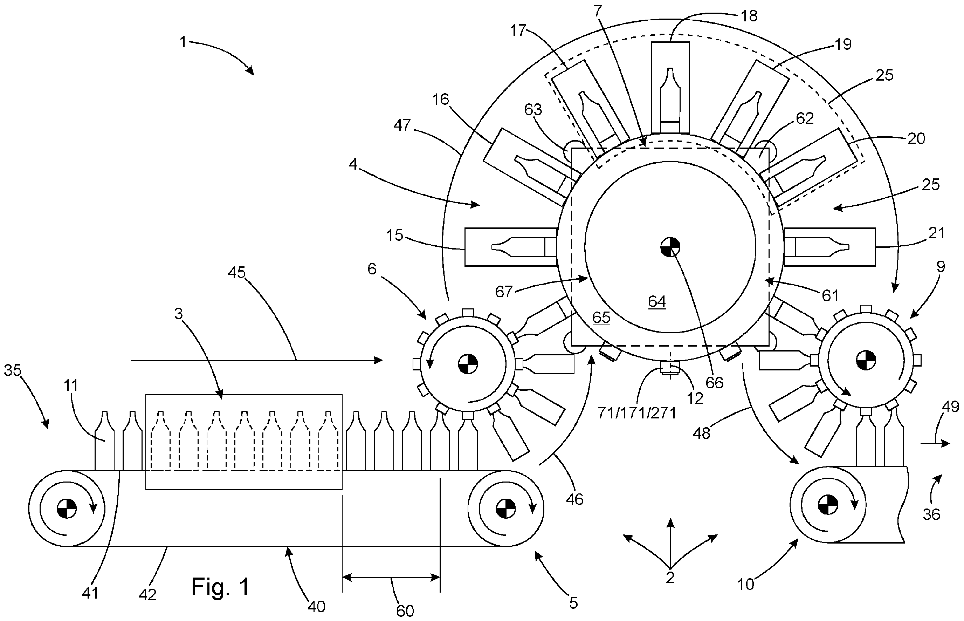

Eine in der Figur 1 gezeigte Bearbeitungseinrichtung 1 ist zur Bedruckung von Metallflaschen 11 vorgesehen, die als Sonderform von Dosen anzusehen sind und sich durch die Gestaltung des offenen Endes mit einem Flaschenhals von einer nicht dargestellten Aluminium-Aerosoldose oder einer Metall-Getränkedose oder einer Kunststoff-Kartusche als weitere exemplarische Vertreter von Dosen unterscheiden.

Die Bearbeitungseinrichtung 1 dient zum Transport und zur Bearbeitung der Metallflaschen 11 ausgehend von einer Beladeposition 35 bis zu einer nur angedeuteten Entladeposition 36 und umfasst rein exemplarisch unterschiedliche Fördermittel wie ein erstes Förderband 5, einen Ladestern 6, einen als Fördereinrichtung dienenden Werkstückrundtisch 7, einen Entladestern 9 und ein zweites Förderband 10.

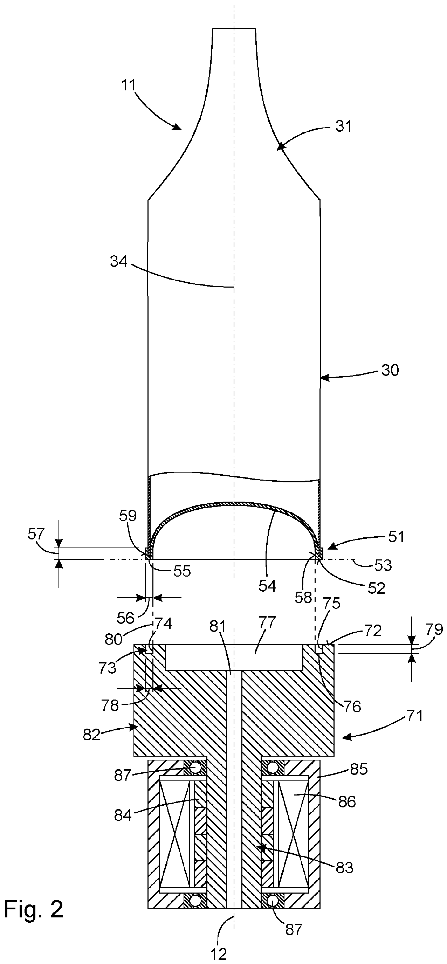

Das erste Förderband 5 umfasst rein exemplarisch ein endlos umlaufendes Kettenband 40, dessen Obertrum 41 abschnittsweise durch eine rein exemplarisch als Durchlaufofen ausgebildete Vorbehandlungskammer 3 geführt ist, während ein Untertrum 42 des Kettenbands 40 unterhalb der Vorbehandlungskammer 3 geführt ist. Beispielhaft ist vorgesehen, dass die Metallflaschen 11 an der Beladeposition 35 in nicht näher dargestellter Weise von manuell von einem Bediener oder automatisiert von einem Industrieroboter oder einer anderen Zufuhreinrichtung beabstandet auf das Obertrum 41 des ersten Förderbands 5 aufgesetzt werden. Hierbei ist vorgesehen, dass die Metallflaschen 11 mit einer in der Figur 2 detailliert dargestellten und im Zusammenhang mit der Figur 2 nachstehend näher beschriebenen kreisringförmigen Standfläche 52 auf dem Obertrum 41 des ersten Förderbands 5 aufgestellt werden.

Beispielhaft ist vorgesehen, dass die Metallflaschen 11 jeweils mit Abstand in einer einzigen Reihe auf das erste Förderband 5 aufgesetzt werden und durch die Förderbewegung des ersten Förderbands 5 entlang eines ersten, geradlinig ausgebildeten Förderwegabschnitts 45 bis zum Ladestern 6 gefördert werden. Beispielhaft ist vorgesehen, dass in der Vorbehandlungskammer 3 eine Erwärmung der Metallflaschen 11 auf eine vorgegebene Bearbeitungstemperatur vorgenommen wird.

Rein exemplarisch ist vorgesehen, dass am Ende des ersten Förderbands 5 ein Abnahmevorgang für die Metallflaschen 11 mit Hilfe des Ladesterns 6 durchgeführt wird, der eine gemäß der Darstellung der Figur 1 entgegen dem Uhrzeigersinn ablaufende Drehschrittbewegung durchführt und die Metallflaschen 11 am Flaschenhals 31 ergreift. Dementsprechend ist der Bodenbereich 54 der Metallflaschen 11 frei und kann im Zuge einer gegensinnigen, auf eine Drehschrittbewegung des Ladesterns 6 angepasste Drehschrittbewegung des benachbart zum Ladestern 6 angeordneten Werkstückrundtischs 7, der auch als Fördereinrichtung bezeichnet wird, von einem jeweiligen Saughalter 71 (oder einem Saughalter 171 oder einem Saughalter 271) unter Verwendung eines Unterdrucks am Werkstückrundtisch 7 festgelegt werden.

Der Werkstückrundtisch 7 ist rein exemplarisch als elektrischer Direktantrieb ausgebildet und umfasst einen beispielhaft kreiszylindrisch ausgebildeten Stator 64, in dem eine nicht näher dargestellte Magnetspulenanordnung aufgenommen ist, die zur Bereitstellung eines rotierenden elektromagnetischen Wanderfelds ausgebildet sind. Am Stator 64 ist ein Rotor 65 drehbeweglich gelagert, der mit nicht näher dargestellten Permanentmagneten ausgerüstet ist und der durch magnetische Wechselwirkung zwischen den Permanentmagneten und dem Wanderfeld in eine Rotation um eine senkrecht zur Darstellungsebene der Figur 1 ausgerichtete Rotorachse 66 versetzt werden kann. Dabei bilden der Stator 64 und der Rotor 65 rein exemplarisch einen als elektrische Antriebseinrichtung 67 bezeichneten Asynchronmotor.

Die zur Ansteuerung der Magnetspulenanordnung des Stators 64 erforderliche elektrische Ausrüstung (elektrische Spannungsquelle und elektrische Steuerungseinrichtung, ist aus Gründen der Übersichtlichkeit in der Figur 1 nicht dargestellt. Beispielhaft ist vorgesehen, dass der Stator 64 an einer rein exemplarisch quadratisch ausgebildeten Grundplatte 62 befestigt ist, die jeweils in Eckbereichen mit Standfüßen 63 versehen ist, auf denen das aus der Grundplatte 62 und den Standfüßen 63 gebildete Maschinengestell 61 auf einem nicht dargestellten, parallel zur Darstellungsebene der Figur 1 ausgerichteten Hallenboden aufgestellt werden kann.

Anschließend an die Übergabe vom Ladestern 6 an den Werkstückrundtisch 7 werden die mittels der Saughalter 71 am Werkstückrundtisch 7 festgelegten Metallflaschen 11 im Zuge der gemäß der Darstellung der Figur 1 im Uhrzeigersinn vorgesehenen Drehschrittbewegung des Werkstückrundtischs 7 an einer Reihe von nachstehend näher beschriebenen Arbeitsstationen 15 bis 21 vorbeigeführt. Hierbei sind Arbeitsstationen 15 bis 21 derart auf die Drehschrittbewegung des Werkstückrundtischs 7 und die Anordnung der Saughalter 71 am Werkstückrundtisch 7 angepasst, dass die Metallflaschen 11 während der Bewegungspausen des Werkstückrundtischs 7 jeweils exakt gegenüberliegend zu den Arbeitsstationen 15 bis 21 angeordnet sind.

Beispielhaft ist vorgesehen, dass die erste Arbeitsstation 15 als optische Inspektionseinrichtung ausgebildet ist, mit deren Hilfe geprüft werden kann, ob die Metallflasche 11 korrekt ausgerichtet im Saughalter 71 aufgenommen ist. Ferner kann mit der optischen Inspektionseinrichtung der ersten Arbeitsstation 15 auch eine rotatorische Positionierung der Metallflasche 11 um die Mittelachse 34 geprüft werden, um eine nachfolgende Durchführung der Aktivierung und des Druckvorgangs für die Metallflaschen 11 lagerichtig zur Bedruckungszone 32 durchführen zu können. Hierbei ist zugrunde zu legen, dass jeder der Saughalter 71 um eine in radialer Richtung bezüglich des Werkstückrundtischs 7 ausgerichtete Mittelachse 12, die koaxial zu der Mittelachse 34 der jeweiligen Metallflasche 11 ausgerichtet ist, drehbar am Werkstückrundtisch 7 gelagert ist.

Dement-sprechend kann für die Durchführung der optischen Inspektion mittels der ersten Arbeitsstation 15 vorgesehen werden, die Metallflasche 11 um ihre Rotationssymmetrieachse zu drehen, um dadurch die rotatorische Ausrichtung der Metallflaschen 11 feststellen zu können.

Im Zuge der Durchführung einer nachfolgenden Drehschrittbewegung des Werkstückrundtischs 7 wird die jeweilige Metallflasche 11 von der ersten Arbeitsstation 15 zur zweiten Arbeitsstationen 16 bewegt, so dass die Metallflasche 11 in der nachfolgenden Stillstandszeit des Werkstückrundtischs 7 gegenüberliegend zur zweiten Arbeitsstation 16 angeordnet ist. Die zweite Arbeitsstation 16 wird auch als Aktivierungsstation bezeichnet und beinhaltet eine nicht näher dargestellte Aktivierungseinrichtung zur Durchführung eines Aktivierungsverfahrens aus der Gruppe: Koronaentladung, Plasmaentladung, Gasflamme, Infrarotbestrahlung.

Vorzugsweise ist vorgesehen, dass die Bedruckungszone 32 möglichst exakt gegenüberliegend zu der nicht näher dargestellten Aktivierungseinrichtung ausgerichtet wird, um mit möglichst geringen Energieeintrag in die Metallflaschen 11 ein möglichst maximales Aktivierungsergebnis für die Bedruckungszone 32 zu erzielen. Je nach Auswahl des Aktivierungsverfahrens und nach Ausgestaltung der jeweiligen Aktivierungseinrichtung kann vorgesehen sein, die Metallflaschen 11 während der Durchführung der Aktivierung in einer konstanten rotatorischen Position zu halten oder zumindest um einen gewissen Winkelbetrag um die Mittelachse 12 zu rotieren.

Im Zuge der nächsten drei Drehschrittbewegungen wird die Metallflasche 11 in den jeweiligen Stillstandszeiten gegenüberliegend zur dritten Arbeitsstation 17, zur vierten Arbeitsstation 18 und zu fünften Arbeitsstation 19 angeordnet, die jeweils einen oder mehrere, nicht dargestellte Digitaldruccköpfe aufweisen und die in ihrer Gemeinsamkeit ein Digitaldruckwerk 25 bilden. An jeder dieser Arbeitsstationen 17 bis 19 erfolgt ein Farbauftrag in der Bedruckungszone 32 der Metallflaschen 11.

Beispielhaft ist vorgesehen, dass an den Arbeitsstationen 17 bis 19 jeweils genau eine Farbe, beispielsweise Cyan, Yellow, Magenta, auf die Bedruckungszone 32 abgegeben werden, um ein mehrfarbiges Druckbild für die Metallflaschen 11 zu realisieren. Je nach Ausgestaltung des Digitaldruckwerks 25 kann dieses auch weniger oder weitere Arbeitsstationen mit Druckköpfen aufweisen.

Nach dem Bedrucken der Bedruckungszone 32 an den Arbeitsstationen 17 bis 19 ist rein exemplarisch vorgesehen, die Bedruckungszone 32 mit einer Beschichtung zu versehen, die einerseits einen mechanischen Schutz für das erzeugte Druckbild und andererseits einen Schutz gegenüber aggressiven Medien, beispielsweise Flüssigkeiten, für das Druckbild gewährleistet. Beispielsweise ist die sechste Arbeitsstation 20 für eine kontaktlose Aufbringung der Beschichtung in einem Tintenstrahldruckverfahren ausgebildet und umfasst daher ebenfalls einen oder mehrere nicht dargestellte Druckköpfe.

Im Zuge einer weiteren Drehschrittbewegung für den Werkstückrundtisch 7 gelangt die Metallflasche 11 zur siebten Arbeitsstation 21, die rein exemplarisch für eine nachträgliche und zusätzliche Aushärtung der in den vorhergehenden Bedruckungsschritten aufgebrachten und an den jeweiligen Arbeitsstationen 17 bis bereits vorläufig ausgehärteten Druckfarbe vorgesehen ist, wofür die Arbeitsstationen 17 bis 19 des Digitaldruckwerks 25 mit nicht dargestellten (Ultraviolett-)Strahlungsquellen zur Aushärtung der jeweils an der Arbeitsstation 17 bis 19 aufgebrachten Druckfarbe ausgerüstet sind.

Mit einer weiteren Drehschrittbewegung des Werkstückrundtischs 7 erreicht die jeweilige Metallflasche 11 eine Entladeposition 36, bei der ein Entladestern 9 die jeweiligen Metallflaschen 11 am Flaschenhals 31 ergreifen kann, um diesen aus dem Saughalter 71 zu entnehmen und auf das zweite Förderband 10 zu stellen.

Aufgrund der Verwendung des Ladesterns 6, des Werkstückrundtischs 7 sowie des Entladesterns 9 ergeben sich ein kreisabschnittsförmiger, zweiter Förderwegabschnitt 46, ein kreisabschnittsförmiger, dritter Förderwegabschnitt 47 sowie ein kreisabschnittsförmiger, vierter Förderwegabschnitt 48, an den sich ein vom zweite Förderband 10 bestimmter, geradliniger fünfter Förderwegabschnitt 49 anschließt. Es versteht sich, dass anstelle der vorstehend beschriebenen Komponenten auch andere Komponenten eingesetzt werden können, um einen anderen Förderweg 44 für die Metallflaschen 11 vorgeben zu können.

Wie der Darstellung der Figur 2 entnommen werden kann, weist die Metallflasche 11 einen kreiszylindrischen Behälterabschnitt 30 auf, der an einem ersten Endbereich mit einem verjüngt ausgebildeten Flaschenhals 31 und an einem zweiten Endbereich mit einem hier als Flaschenboden 51 bezeichneten Dosenboden versehen ist.

Rein exemplarisch ist der Flaschenhals 31 das Ergebnis einer nicht dargestellten Umformung des ersten Endbereichs des Behälterabschnitts 30. Der Flaschenboden 51 ist rein exemplarisch aus einem separaten Metallteil hergestellt und beispielsweise mit dem Behälterabschnitt 30 umlaufend stoffschlüssig verbunden, insbesondere verschweißt. Alternativ kann bei einer nicht dargestellten Variante einer Dose vorgesehen sein, dass der Flaschenboden einstückig mit dem Behälterabschnitt 30 ausgebildet ist, wie dies insbesondere im Bereich der Aluminium-Aerosoldosen üblich ist.

Entscheidend ist, dass der Flaschenboden 51 stirnseitig eine kreisringförmige Standfläche 52 aufweist, die die koaxial zu einer Mittelachse 34 der Metallflasche 11 ausgerichtet ist. Bevorzugt ist vorgesehen, dass die Standfläche 52 in einer Ebene 53 angeordnet ist, die quer zur Mittelachse 34 ausgerichtet ist. Die Standfläche 52 ist bei der Metallflasche 11 gemäß der Darstellung der Figur 2 kreisringförmig ausgebildet, wobei es sich hierbei um eine modellhafte und idealisierte Darstellung handelt. In der Praxis ist davon auszugehen, dass die Standfläche in einer Querschnittsebene, die der Darstellungsebene der Figur 2 entspricht, anstelle der rechteckigen Profilierung eine zumindest bereichsweise gekrümmte Profilierung aufweist, die sich durch die Umformung des Flaschenbodens 51 bei der Montage an den Behälterabschnitt 30 ergibt. Hierbei kann sich die idealisierte kreisringförmige Standfläche 52 in der Praxis gegebenenfalls bis auf eine nicht dargestellte kreisförmige Standfläche reduzieren, so dass auch eine Kontaktfläche mit einem Untergrund, auf den die Metallflasche 11 gestellt wird, eine Kreislinie bildet.

Angrenzend an die Standfläche 52 weist der Flaschenboden 51 in radialer Richtung nach innen bei einer Betrachtung der Metallflasche 11 von außen einen konkav nach innen gewölbten Bodenbereich 54 auf, der auch als "Dom" bezeichnet, wird und der aufgrund dieser Wölbung nach innen eine hohe Deformationsstabilität aufweist. Hierdurch wird sichergestellt, dass der Flaschenboden 51 auch bei einer Ausdehnung des Behälterinhalts der Metallflasche 11 und einem damit einhergehenden Druckanstieg in der Metallflasche 11 zumindest bis zu einem vorgegebenen Druckniveau seine Form behält.

Um die Metallflaschen 11 zuverlässig mit Hilfe des Werkstückrundtischs 7, der während der Durchführung der Drehschrittbewegungen erhebliche Beschleunigungskräfte und Abbremsungskräfte auf die Metallflaschen überträgt, bewegen zu können, ist eine zuverlässige Fixierung der Metallflaschen 11 an den jeweiligen Saughaltern 71 erforderlich. Hierzu ist der Saughalter 71 rein exemplarisch als rotationssymmetrisch zur Mittelachse 12 gestalteter, einstückiger Körper aus einem Kunststoffmaterial oder einem Metallmaterial hergestellt. An einer auch als Saugfläche bezeichneten, dem Werkstückrundtisch 7 abgewandten Stirnfläche 72, die beispielhaft eben ausgeführt und quer zur Mittelachse 12 ausgerichtet ist, eine umlaufende Nut 73 sowie eine rein exemplarisch kreiszylindrisch und koaxial zur Mittelachse 12 ausgerichtete Ausnehmung 77 auf.

Eine Profilierung der Nut 73 in einer Querschnittsebene, die der Darstellungsebene der Figur 2 entspricht, ist rein exemplarisch rechteckig gewählt und an die Geometrie des Flaschenbodens 51 angepasst. Beispielhaft ist vorgesehen, dass eine Spaltweite 78 der Nut 73, die auch als Abstand zwischen einer inneren Umfangsfläche 74 und einer äußeren Umfangsfläche 75 beschrieben werden kann, geringfügig größer als eine Breite 56 eines stirnseitig an der Metallflasche 11 ausgebildeten Kreisringabschnitts 55 gewählt ist. Wahlweise kann vorgesehen sein, dass die innere Umfangsfläche 74 oder die äußere Umfangsfläche 75 für eine Zentrierung der Metallflasche 11 vorgesehen ist und hinsichtlich ihres jeweiligen Durchmessers mit enger Tolerierung an die entsprechende Oberfläche des Flaschenbodens 51 angepasst ist. Dementsprechend bildet die innere Umfangsfläche 74 oder die äußere Umfangsfläche 75 auch einen Zentrierkreis, der die Lage des wenigstens einen, hier eben wahlerweise als innere Umfangsfläche 74 oder äußere Umfangsfläche 75 ausgebildeten Zentrierelements beschreibt.

Eine Tiefe 79 der Nut 73 ist geringfügig kleiner als eine Höhe 57 des Kreisringsabschnitts 55, sodass stets gewährleistet ist, dass die kreisringförmige Standfläche 52 der Metallflasche 11 flächig auf einem Nutgrund der Nut 73, der als Kreisringfläche 76 ausgebildet ist, aufliegt.

Die Ausnehmung 77 weist einen nicht bezeichneten Innendurchmesser auf, der geringfügig kleiner als ein ebenfalls nicht bezeichneter Innendurchmesser des Bodenbereichs 54 des Flaschenbodens 51 ist und gewährleistet hiermit eine großflächige Unterdruckbeaufschlagung des Flaschenbodens 51. Für die Unterdruckbeaufschlagung eines vom Flaschenboden 51 und von der Ausnehmung 77 begrenzten Vakuumraums 80 erstreckt sich ausgehend von der Ausnehmung 77 ein Versorgungskanal 81, der rein exemplarisch koaxial zur Mittelachse 12 angeordnet und beispielhaft als kreiszylindrische Bohrung ausgebildet ist. Der Versorgungskanal 81 mündet in nicht näher dargestellter Weise in einen Verbindungskanal, der im Rotor 65 ausgebildet ist und der sich von dort aus über eine ebenfalls nicht dargestellte Drehdurchführung bis in den Stator 64 erstreckt, von wo aus eine nicht dargestellte Verbindung mit einer ebenfalls nicht dargestellten Unterdruckquelle verwirklicht ist.

Bei der Ausführungsform des Saughalters 71, wie er in der Figur 2 dargestellt ist, schließt sich an einen beispielhaft kreiszylindrisch ausgebildeten und gemäß der Darstellung der Figur 1 außerhalb des Rotors 65 angeordneten Halteabschnitt 82 ein mit kleinerem Durchmesser verwirklichter Schaftabschnitt 83 an, der ebenfalls kreiszylindrisch ausgebildet sein kann und der in nicht näher dargestellter Weise im Rotor 65 angeordnet ist, wie nachstehend näher erläutert wird.

Wie der Darstellung der Figur 2 entnommen werden kann, ist der Schaftabschnitt 83 an einer Außenoberfläche mit mehreren, jeweils gegensinnig zueinander gepolten Permanentmagneten 84 versehen, die vorzugsweise in radialer Richtung magnetisiert sind. Die Permanentmagnete 84 sind für eine magnetische Wechselwirkung mit einer hülsenförmigen Magnetspule 86 ausgebildet, die in einem Motorgehäuse 85 aufgenommen ist. Ferner ist vorgesehen, dass der Schaftabschnitt 83 mit Kugellagern 87 drehbeweglich am Motorgehäuse 85 gelagert ist. Die Magnetspule 86 und die Permanentmagnete 84 bilden einen Elektromotor, der bei einer Versorgung mit elektrischer Energie eine Rotationsbewegung des Saughalters 71 mit der daran aufgenommenen Metallflasche 11 bewirken kann.

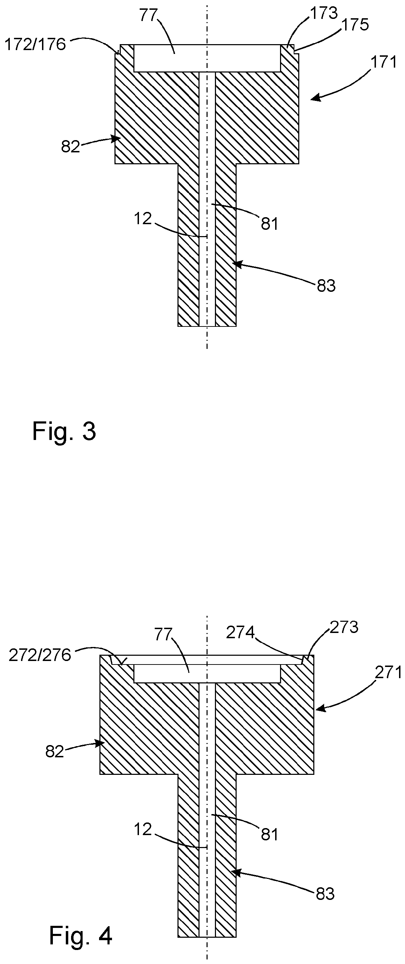

Die in der Figur 3 gezeigte zweite Ausführungsform eines Saughalters 171 unterscheidet sich von der ersten Ausführungsform des Saughalters 71 gemäß der Figur 2 dadurch, dass ausgehend von der Stirnfläche 172 ein in axialer Richtung erstreckter, koaxial zur Mittelachse 12 ausgerichteter und rein exemplarisch mit einem rechteckigen Querschnitt ausgebildeter Ringbund 173 vorgesehen ist, so dass die Stirnfläche 172 auch die Kreisringfläche 176 bildet. Dabei bildet eine Außenumfangsfläche 175 das Zentrierelement für die Metallflasche 11, so dass die Metallflasche 11 bei der Zuführung an den Saughalter 171 mit der Innenumfangsfläche 58 des Flaschenbodens 51 an der Außenumfangsfläche 175 des Ringbunds 173 zentriert wird.

Die in der Figur 4 gezeigte dritte Ausführungsform eines Saughalters 271 unterscheidet sich von der ersten Ausführungsform des Saughalters 71 gemäß der Figur 2 dadurch, dass ausgehend von der Stirnfläche 272 ein in axialer Richtung erstreckter, koaxial zur Mittelachse 12 ausgerichteter und rein exemplarisch mit einem trapezförmigen Querschnitt ausgebildeter Ringbund 273 vorgesehen ist, so dass die Stirnfläche 272 auch die Kreisringfläche 276 bildet. Dabei bildet eine Innenumfangsfläche 274 das Zentrierelement für die Metallflasche 11, so dass die Metallflasche 11 bei der Zuführung an den Saughalter 271 mit der Außenumfangsfläche 59 des Flaschenbodens 51 an der Innenumfangsfläche 274 des Ringbunds 273 zentriert wird. Aufgrund der trapezförmigen Profilierung ist die Innenumfangsfläche 274 konusabschnittsförmig ausgebildet und begünstigt hiermit beim Beladen des Saughalters 271 mit der Metallflasche 11 die Zentrierung gegenüber der Kreisringfäche 276.

## Patentansprüche

1. Fördereinrichtung (7) für kreiszylindrische Dosen (11), mit einem Maschinengestell (61), an dem ein Stator (64) einer Antriebseinrichtung (67) festgelegt ist, wobei die Antriebseinrichtung (67) einen Rotor (65) aufweist, der beweglich, insbesondere drehbeweglich um eine Rotorachse (66), am Stator (64) gelagert ist und wobei an dem Rotor (65) wenigstens ein Saughalter (71; 171; 271) angeordnet ist, der für eine Kraftübertragung auf einen Dosenboden (51) einer kreiszylindrischen Dose (11) ausgebildet ist, wobei der Saughalter (71; 171; 271) an einer dem Rotor (65) abgewandten Saugoberfläche (72; 172; 272) eine eben ausgebildete Kreisringfläche (76; 176; 276) aufweist, die in radialer Richtung von wenigstens einem Zentrierelement (74, 75; 274; 175) berandet ist, das auf einem koaxial zu einer Mittelachse (12) der Kreisringfläche (76; 176; 276) ausgerichteten Zentrierkreis angeordnet ist, wobei radial nach innen beabstandet von der Kreisringfläche (76; 176; 276) ein Fluidauslass (77) für eine Vakuumbeaufschlagung eines Vakuumraums angeordnet ist, der bereichsweise von der Saugoberfläche (72; 172; 272) und bereichsweise von einem Dosenboden (51) begrenzt ist.

2. Fördereinrichtung (7) nach Anspruch 1, **dadurch gekennzeichnet, dass** das Zentrierelement (74, 75; 274; 175) als Ringbund ausgebildet ist, der eine an die Kreisringfläche (76; 176; 276) angrenzende, koaxial zur Mittelachse (12) ausgerichtete kreiszylindrische oder konusmantelförmige Umfangswand aufweist.

3. Fördereinrichtung (7) nach Anspruch 2, **dadurch gekennzeichnet, dass** der Ringbund in radialer Richtung nach innen an die Kreisringfläche (76; 176; 276) angrenzt.

4. Fördereinrichtung (7) nach Anspruch 2, **dadurch gekennzeichnet, dass** der Ringbund in radialer Richtung nach außen an die Kreisringfläche (76; 176; 276) angrenzt.

5. Fördereinrichtung (7) nach einem der Ansprüche 1 bis 4, **dadurch gekennzeichnet, dass** der, insbesondere als Läufer eines Antriebsmotors ausgebildete, Saughalter (71; 171; 271) drehbeweglich um die Mittelachse (12) am Rotor (65) gelagert ist.

6. Fördereinrichtung (7) nach einem der Ansprüche 1 bis 5, **dadurch gekennzeichnet, dass** die Mittelachse (12) der Kreisringfläche (76; 176; 276) parallel und beabstandet zur Rotorachse (66) ausgerichtet ist.

7. Fördereinrichtung (7) nach einem der Ansprüche 1 bis 5, **dadurch gekennzeichnet, dass** die Mittelachse (12) der Kreisringfläche (76; 176; 276) quer zur Rotorachse (66) ausgerichtet ist.

8. Fördereinrichtung (7) nach einem der Ansprüche 1 bis 6, **dadurch gekennzeichnet, dass** der Fluidauslass (77) in fluidisch kommunizierender Verbindung mit einem Versorgungskanal steht, der sich vom Saughalter (71; 171; 271) durch den Rotor in den Stator erstreckt, wobei der Versorgungskanal zwischen dem Rotor und dem Stator als Drehdurchführung ausgebildet ist.

9. Fördereinrichtung (7) nach einem der Ansprüche 1 bis 8, **dadurch gekennzeichnet, dass** die Antriebseinrichtung (67) zur Durchführung einer Drehschrittbewegung ausgebildet ist und dass dem Rotor (65) eine Beladestation (6) für eine Zufuhr von Dosen (11) zu dem Saughalter (71; 171; 271) und eine Entladestation (9) für eine Abfuhr von Dosen (11) von dem Saughalter (71; 171; 271) zugeordnet ist und dass der Saughalter (71; 171; 271) zwischen der Beladestation (6) und der Entladestation (9) einen kreisbogenabschnittsförmigen Förderweg (44) überstreicht.

10. Fördereinrichtung (7) nach Anspruch 9, **dadurch gekennzeichnet, dass** längs des Förderwegs (44) wenigstens eine Dosenbearbeitungsstation (15 bis 21) aus der Gruppe: Oberflächenaktivierungsstation (16), Oberflächenpassivierungsstation (20), Oberflächenbeschichtungsstation (17, 18, 19), angeordnet ist.

11. Fördereinrichtung (7) nach Anspruch 10, **dadurch gekennzeichnet, dass** längs des Förderwegs (44), insbesondere in konstanter Winkelteilung bezüglich der Rotorachse (66), mehrere Oberflächenbeschichtungsstationen (17, 18, 19) angeordnet sind, die jeweils wenigstens einen Tintenstrahldruckkopf aufweisen.

12. Fördereinrichtung (7) nach Anspruch 1, **dadurch gekennzeichnet, dass** der Saughalter (71; 171; 271) einstückig ausgebildet ist.
